# NEUE EUROPÄISCHE PATENTSCHRIFT

(11) **EP 0 453 608 B2**
(45) Veröffentlichungstag und Bekanntmachung des Hinweises auf die Entscheidung über den Einspruch: **18.11.1998**
(45) Hinweis auf die Patenterteilung: 17.08.1994
(21) Anmeldenummer: 90108056.4
(22) Anmeldetag: 27.04.1990
(51) Int. Cl.: H04M 1/274

(54) **Verfahren zur Wahlwiederholung von aus einer Wahlinformationsspeichereinrichtung auswählbaren Wahlinformationen**
Method for automatic redialling of selective dial information recorded in a memory
Procédé pour la recomposition automatique d'informations de numérotation sélectionnées et continues dans une mémoire

(43) Veröffentlichungstag der Anmeldung: 30.10.1991
(73) Patentinhaber: SIEMENS AKTIENGESELLSCHAFT, 80333 München (DE)
(72) Erfinder: Pryor, Richard, Dipl.-Ing., D-8000 München 19 (DE)

(56) Entgegenhaltungen:
- EP-A- 206 391
- EP-A- 0 268 739
- EP-A- 0 355 777
- DE-A- 3 102 339
- DE-A- 3 540 301
- DE-A- 3 630 471
- DE-A- 3 932 686
- US-A- 4 870 677
- US-A- 4 908 853
- PTR/PHILIPS TELECOMMUN. & DATA SYSTEMS REVIEW, Band 47, Nr. 1, März 1989, Seiten 1-14, Hilversum, NL; C.M. KLIK: "The SOPHO-SET family of digital telephone terminals for SOPHO-S PABXs"
- Offenkundige Vorbenutzung durch das von der Fa. Loewe Opta GmbH, Industriestr. 11, 96317 Kronach, 1988 + 1989 hergestellte Bildschirmtelefongerät "MULTITEL-S" mit der Art. Nr. PTT 211.08.8. Zum nachweis werden vorgelegt: - Bedienungsanleitung, Deckblatt, Seiten 2,3,4,5,11,12,20 und 21, sowie Seite 89 und Rückseite. - Schaltplan "SW-Multitel Decoder Teil", Zeichnungsnr. 36-84076.050 mit handschriftlicher Ergänzung .055 durch den seinerzeitigen Zeichnungsfertiger. - Schaltplan bezüglich "Nichtflüchtiger Speicher für S/W-Multitel" 396-84409 bzw. (handschriftlich ergänzt) 396-84855.050.
- - Verkaufsbelege der Fa. Loewe Opta aus denen ersichtlich ist, da im Jahre 1989 Lieferungen der Geräte MultiTel-S an die Generaldirektion PTT, Bern, Schweiz, erfolgt sind.
- Technische Lieferbedingungen des fernmeldetechnischen Zentralamtes L31 FTZ 121 6 TL mit dem Titel "CEPT-Tel" 03/88, Deckblatt, Seiten 2, 9 und 10, sowie Anang B (FTZ 1 TR 2) Teil 3, Seite 11 (Kap. 3.2), Seite 12 (Kap. 3.3) und Seite 13 (Kap. 3.3.2).
- Technische Vorschrift "FTZ 18 R 1", herausgegeben von dem Fernmeldetechnischen Zentralamt, Referat T 32, im August 1985, mit dem Titel "Allgemeine Forderungen an privaten Einrichtungen zum Anschlu bei Sprechstellen des öffentlichen Fernsprechnetzes", Deckblatt, Seiten 2 und 3, Seiten 15 und 16.
- CCITT Blue Book, Vol. VI - Fascicle VI.11, mit dem Titel "Digital subscriber signalling system no. 1 (DSS 1), network layer, user-network management", herausgegeben 1989, Melbourne 14 bis 25 Nov. 1988, Seiten III, IV, V, VI, sowie Seiten 30, 31, 94, 95.
- Auszug aus der Bedienunsanleitung des Fernsprechapparates der Fa. Siemens "Namentasten-Fernsprecher", Ordering No. N 152/1915.444, mit Print-Vermerk (0062) Bb 04838
- Auszug aus der Bedienungsanleitung des Fernsprechgerätes der Fa. Siemens "Der Namentaster", Bestell-Nr. N 157/5201, mit Print-Vermerk WS 038110.
- FTZ 1 TR 241 Ausgabe 12/88 (Normschrift der Deutschen Bundespost), Deckblatt, Inhaltsverzeichnis, seiten 72-75.
- "Taschenbuch der Nachrichtentechnik", Seiten 248-251, Deckblatt, Innenseite, 3. Ausg.-Berlin:Fachverl. Schiele u. Schön, 1988
- Peter Bocker: "ISDN Das diensteintegrierende digitale Nachrichtennetz, Konzept, Verfahren, Systeme", Seiten 20-22, Springer-Verlag 1986.

## Beschreibung

Kommunikationsendgeräte, insbesondere Fernsprechendgeräte, sind seit geraumer Zeit mit Wahlwiederholungsfunktionen ausgestattet. Hierbei werden während des Verbindungsaufbaus die durch Wähltasten gebildeten Wahlinformationen automatisch oder durch zusätzliche Tasteneingabe und die durch Kurzwahl-, Namen- oder Direktruftasten gebildeten Wahlinformationen, wenn vorgesehen, überwiegend durch Tasteneingabe für eine spätere Wahlwiederholung in einem Wahlwiederholungsspeicher hinterlegt. Kommt keine Verbindung mit dem durch die Wahlinformationen bestimmten Kommunikationsendgerät zustande - belegt oder unbesetzt -, so kann die im Wahlwiederholungsspeicher gespeicherte Wahlinformation durch Betätigen einer Wahlwiederholungstaste zu einem beliebigen Zeitpunkt im Sinne eines erneuten Verbindungsaufbauversuches zur zugeordneten Kommunikationsanlage übermittelt werden. Bei diesem Wahlwiederholungsverfahren kann bei automatischer Speicherung nur jeweils die zuletzt gebildete Wahlinformation und bei Speicherung durch Tasteneingabe nur jeweils eine Wahlinformation für einen Verbindungsaufbau im Sinne einer Wahlwiederholung herangezogen werden.

Die der Erfindung zugrundeliegende Aufgabe besteht darin, weitere, bereits in den jeweiligen Kommunikationsendgeräten gebildete Wahlinformationen in ein Wahlwiederholungsverfahren auszugestalten. Die Aufgabe wird ausgehend von einem an eine Kommunikationsanlage angeschlossenen Kommunikationsendgerät gemäß Oberbegriff des Anspruches 1 durch dessen kennzeichnende Merkmale gelöst.

Der wesentliche Aspekt der Erfindung ist darin zu sehen, daß in einer Wahlinformations-Speichereinrichtung mehrere, bei erfolglosen oder erfolgreichen Verbindungsaufbauversuchen eingegebene Wahlinformationen aufgezeichnet werden und mit Hilfe eines Sucheingabemittels - z. B. Suchtaste - die aufgezeichneten Wahlinformationen im Sinne eines Suchens nach einer bestimmten aufgezeichneten Wahlinformation nacheinander ansteuerbar sind, wobei jede angesteuerte aufgezeichnete Wahlinformation im Kommunikationsendgerät optisch und/oder akustisch angezeigt wird. Durch Betätigen der am Kommunikationsendgerät angeordneten Wahlwiederholungseingabemittel- z. B. Wahlwiederholungstaste - wird ein Verbindungsaufbau der aktuell optisch oder akustisch am Kommunikationsendgerät angezeigten Wahlinformation eingeleitet.

Gemäß der Erfindung können zusätzlich die am Kommunikationsendgerät ankommenden Wahlinformationen in der Wahlinformations-Speichereinrichtung gespeichert und markiert werden. Voraussetzung hierfür ist - dies ist in den digitalen Kommunikationsnetzen, insbesondere im integrierten Daten- und Fernsprechnetz (ISDN) der Fall - daß im Rahmen eines Verbindungsaufbaus die Wahlinformationen des rufenden Kommunikationsendgerätes übermittelt werden. Eine Markierung erleichtert während des Suchens die Unterscheidung zwischen intern und extern gebildeten Wahlinformationen.

Gemaß einer weiteren Ausgestaltung der Erfindung werden die Wahlinformationen in einer hinsichtlich der Anzahl der Teilspeicherbereiche begrenzten Wahlinformations-Speichereinrichtung zyklisch, in Teilspeicherbereichs-Reihenfolge gespeichert - siehe Anspruch 3. Die Teilspeicherbereiche der Wahlinformations-Speichereinrichtung werden hierbei mit Hilfe des Sucheingabemittels in Teilspeicherbereichs-Reihenfolge zyklisch angesteuert - siehe Anspruch 4. Die Anzahl der Teilspeicherbereiche ist einerseits auf eine möglichst hohe Anzahl von speicherbaren Wahlinformationen und andererseits auf möglichst kurze Suchzeiten abzustimmen bzw. zu begrenzen. Die Anzahl der Teilspeicherbereiche sollte z. B. so bemessen sein, daß die Suchzeit mit Hilfe des Eingabemittels die Eingabezeit für eine einzugebende Wahlinformation nicht wesentlich übersteigt.

Nach einer weiteren vorteilhaften Ausgestaltung der Erfindung werden mehrere Wahlinformationen mit Hilfe der Anzeigeeinrichtung simultan angezeigt und ist mit Hilfe des Sucheingabemittels ein Markierungssymbol von angezeigter Wahlinformation zu Wahlinformation steuerbar - siehe Anspruch 5. Die Anzahl der anzeigbaren Wahlinformationen ist hierbei durch die Anzeigekapazität der Anzeigeeinrichtung begrenzt. Die Wahlinformationen werden hierbei z. B. gruppenweise von den Teilspeicherbereichen zur Anzeigeeinrichtung übermittelt und dort angezeigt. Wird das Markierungssymbol mit Hilfe der Suchtaste an den oberen oder den unteren Anzeigebereich gesteuert, so werden die folgenden Wahlinformationen beispielsweise wiederum gruppenweise an die Anzeigeeinrichtung übermittelt und dort angezeigt. Mit Hilfe des Sucheingabemittels, z. B. Suchtaste, wird das Markierungssymbol an die gewünschte Wahlinformation gesteuert. Nach Betätigen der Wahlwiederholungstaste wird die markierte Wahlinformation im Sinne eines Verbindungsaufbaus an die Kommunikationsanlage übermittelt.

Im folgenden wird ein Ausführungsbeispiel der Erfindung anhand von Zeichnungen und eines Ablaufdiagrammes erläutert. Dabei zeigen
- FIG 1: die Bedieneroberfläche eines Kommunikationsendgerätes,
- FIG 2: in einem Blockschaltbild die wesentlichen Schaltungskomponenten eines Kommunikationsendgerätes,
- FIG 3: ein Ablaufdiagramm zum Suchen von Wahlinformationen in einer Wahlinformations-Speichereinrichtung und
- FIG 4: ein Ablaufdiagramm zur Wahlwiederholung mit der gesuchten Wahlinformation.

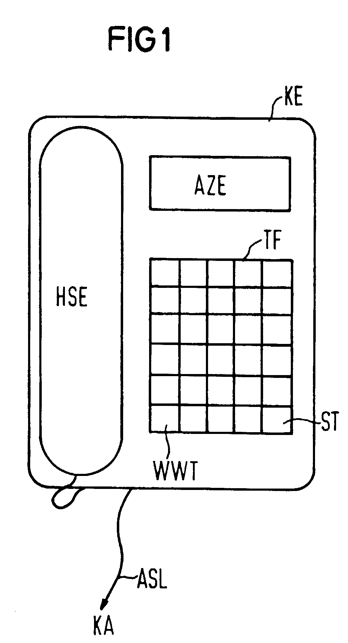

FIG 1 zeigt die Draufsicht auf ein Kommunikationsendgerät KE mit einer aufgelegten Hör-/Sprecheinrichtung HSE. Für die Anzeige von Ziffern, Text und den Wahlinformationen ist eine Anzeigeeinrichtung AZE vorgesehen. Diese Anzeigeeinrichtung AZE ist beispielsweise durch ein LCD-Display realisiert. Des weiteren ist für die Eingabe von Signalisierungs- und Wahlinformationen ein Tastenfeld TF vorgesehen. Dieses Tastenfeld TF enthält die nicht im einzelnen dargestellten numerischen Tasten für die Eingabe von Wahlinformationen und weitere Tasten für die Eingabe von Zusatzfunktionen. Eine dieser mit einer Zusatzfunktion ausgestatteten Taste ist eine Wahlwiederholungstaste WWT und eine Suchtaste ST. Durch Betätigen der Suchtaste ST wird der Suchvorgang in einer Wahlinformations-Speichereinrichtung eingeleitet. Während dieses Suchvorgangs werden die aufgezeichneten Wahlinformationen für eine vorgegebene Zeitspanne, z. B. 0,5 s, an der Anzeigeeinrichtung AZE angezeigt. Erscheint die gewünschte Wahlinformation in der Anzeigeeinrichtung AZE, so wird nach Betätigen der Wahlwiederholungstaste WWT ein Verbindungsaufbau mit der angezeigten Wahlinformation eingeleitet. Die Wahlinformationen werden über eine Anschlußleitung ASL zu einer Kommunikationsanlage KA geführt und dort für den weiteren Verbindungsaufbau ausgewertet.

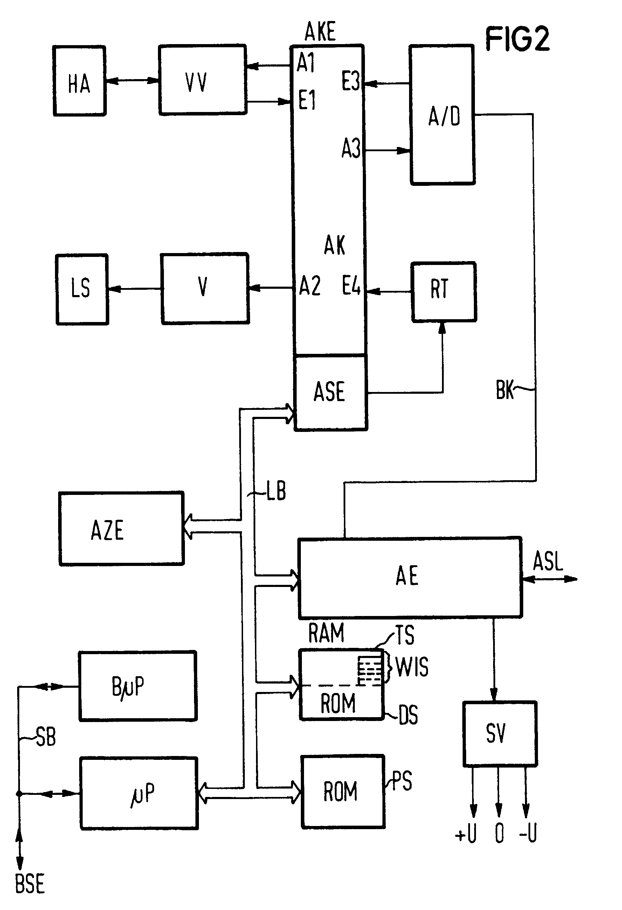

FIG 2 zeigt ein Hardware-Blockschaltbild eines Kommunikationsendgerätes KE. Die zentrale Einrichtung zur Steuerung der Teilnehmer-Bedienprozeduren, zur Steuerung aller im Kommunikationsendgerät KE zu übermittelnder akustischer Signale und zur Steuerung der Signalisierung mit der Kommunikationsanlage KA ist durch ein Mikroprozessorsystem µP realisiert. Beispielsweise kann dieses Mikroprozessorsystem µP durch einen Siemens Mikroprozessor SAB 80C31 gebildet sein. Über einen durch Steuer-, Adreß- und Datenleitungen gebildeten lokalen Bus LB ist das Mikroprozessorsystem µP mit einem Programmspeicher PS und einem Datenspeicher DS verbunden. Der in ROM-Speicher-Technik realisierte Programmspeicher PS ist beispielsweise für ein maximal 64 KByte umfassendes Programm ausgelegt. Der ebenfalls beispielsweise 64 KByte umfassende Datenspeicher kann zur Hälfte einen in ROM-Speicher-Technik ausgeführten Festspeicher - für Festdaten, Parameterdaten und Tabellen - und zur anderen Hälfte einen in RAM-Speicher-Technik ausgeführten Speicher - beispielsweise zur Speicherung benutzerindividueller Daten - enthalten.

In diesem RAM-Speicherbereich RAM ist des weiteren der Wahlinformationsspeicher bzw. die Wahlinformations-Speichereinrichtung WIS enthalten, die mehrere Teilspeicherbereiche TS aufweist. Das Mikroprozessorsystem µP weist zusätzlich eine serielle Busschnittstelle auf. Diese serielle Busschnittstelle ist über den seriellen Bus SB mit einem Bedienfeld-Mikroprozessorsystem BµP verbunden. Über diesen seriellen Bus SB werden zusätzlich auch die an das Kommunikationsendgerät KE angeschlossenen Beistellgeräte BSE betrieben. In dem Bedienfeld-Mikroprozessorsystem BµP werden die von den Bedienelementen bzw. Tasten des Tastenfeldes TF erzeugten codierten Informationen erkannt, über den seriellen Bus SB zum Mikroprozessorsystem µP seriell übertragen und dort zu Signalisierungsinformationen und zu Bedienerführungsinformationen - beispielsweise für Leuchtdioden, Töne und Anzeigen in einer Anzeigeeinrichtung - weiterverarbeitet.

Des weiteren ist an dem lokalen Bus LB eine Anzeigeeinrichtung AZE angeschlossen. Die Anzeigeeinrichtung AZE ist beispielsweise durch ein LC-Display (zwei Zeilen á 24 Zeichen) realisiert. Dieses LC-Display wird zur Anzeige von Ziffern und Klartext sowie Wahlinformationen eingesetzt.

Das Kommunikationsendgerät KE ist über eine Anschalteeinrichtung AE mit einer Teilnehmeranschlußleitung ASL verbunden. Über diese Teilnehmeranschlußleitung ASL kommuniziert das Kommunikationsendgerät KE mit einer Kommunikationsanlage KA. Über die Teilnehmeranschlußleitung ASL werden die 64 KByte/s umfassenden Nachrichten und die 8 KByte/s umfassenden Signalisierungsinformationen bidirektional übermittelt. Die im Signal lisierungskanal übermittelten Signalisierungsinformationen sind entsprechend dem OSI-Referenzmodell strukturiert. Von den sieben abstrahierten Protokollschichten des OSI-Referenzmodells sind die unteren drei Protokollschichten realisiert. Die für die Kommunikationsendgeräte - Kommunikationsanlagen-Signalisierung - eingesetzten Protokollschichten sind als Bitübertragungsschicht (Schicht 1), als Sicherungsschicht (Schicht 2) und als Vermittlungsschicht (Schicht 3) definiert. Die Bitübertragungsschicht, auch als physikalische Ebene bezeichnet, besorgt das Übermitteln der Informationen in den Nachrichten- und Signalisierungskanälen gleichzeitig in beiden Richtungen. Hierbei ist das Aktivieren, Deaktivieren und Betreiben des Kommunikationsendgerätes KE eingeschlossen. Die Sicherungsschicht übernimmt für die anschließende Vermittlungsschicht das gesicherte Übermitteln der Signalisierungsinformationen zwischen der Kommunikationsanlage KA und dem Kommunikationsendgerät KE.

Die Vermittlungsschicht dient dem Aufbau, Überwachen und Abbau der Kommunikationsverbindungen sowie zur Steuerung und Kontrolle der durch die Kommunikationsanlage KA unterstützten Leistungsmerkmale. In der Anschlußeinrichtung AE werden im wesentlichen die Funktionen der Bitübertragungsschicht (Schicht 1) und der Steuerung des Mikroprozessorsystems µP realisiert.

Die in der Anschlußeinrichtung AE von über die Anschlußleitung ASL übermittelten Informationen abgetrennten Signalisierungsinformationen werden lokal-busgemäß aufbereitet und über den lokalen Bus LB an das Mikroprozessorsystem µP übermittelt. Im Mikroprozessorsystem werden diese Signalisierungsinformationen gemäß den der Sicherungsschicht und Vermittlungsschicht zugeordneten Funktionen weiterverarbeitet und die entsprechenden Reaktionen - z. B. Ansteuern von Ausgabeeinheiten - eingeleitet. Die in der Anschlußeinrichtung AE abgetrennten Nachrichteninformationen gelangen an eine Analog-/Digital-Umsetzeinrichtung A/D. In dieser werden aus den von der Anschlußeinrichtung AE abgegebenen digitalisierten Nachrichtenbzw. Sprachsignalen analoge Sprachsignale gebildet. Die an einem weiteren Eingang der Analog/Digital-Umsetzeinrichtung A/D ankommenden analogen Sprachsignale werden in digitale Sprachsignale umgesetzt. Die analogen Sprachsignale gelangen über eine entsprechende Verbindung zu einem dritten Eingang E3 einer Akustikeinrichtung AKE. Die Akustikeinrichtung AKE setzt sich aus einem Akustikkoppler AK und einer Ansteuereinrichtung ASE zusammen. Durch den Akustikkoppler AK werden die von der Analog-/Digital-Umsetzeinrichtung A/D ankommenden analogen Signale entweder nur an einen ersten Ausgang A1 oder an den ersten und an einen zweiten Ausgang A1, A2 vermittelt. Ausgang A1 ist über einen Vorverstärker VV mit dem Handapparat des Kommunikationsendgerätes KE verbunden. Die analogen Sprachsignale werden in jedem Fall nach Durchschalten der Verbindung über den Vorverstärker VV an eine im Handapparat HA angeordnete Hörmuschel geführt. Analog hierzu gelangen die von einem im Handapparat HA angeordneten Mikrophon abgegebenen Sprachsignale über den Vorverstärker VV an einen ersten Eingang E1 des Akustikkopplers AK. Die analogen Sprachsignale werden durch den Akustikkoppler AK an einen mit der Analog-/Digital-Umsetzeinrichtung A/D verbundenen dritten Ausgang A3 vermittelt. Diese analogen Sprachsignale werden in der Analog/Digital-Umsetzeinrichtung A/D in digitale Signale umgesetzt und in der Anschlußeinrichtung AE in den zur Anschlußleitung ASL übermittelten Nachrichtenstrom eingefügt. Ist im Kommunikationsendgerät KE das Leistungsmerkmal "Lauthören" durch beispielsweise einen entsprechenden Tastenanreiz aktiviert, so werden die am dritten Eingang E3 ankommenden analogen Sprachsignale gleichzeitig zu einem zweiten Ausgang A2 des Akustikkopplers AK geführt. Von dort gelangen die analogen Sprachsignale über einen Verstärker V zu einem im Kommunikationsendgerät KE angeordneten Lautsprecher LS. Die in der Akustikeinrichtung AKE angeordnete Ansteuereinrichtung ASE ist sowohl mit dem Akustikkoppler AK als auch mit dem lokalen Bus LB verbunden. In dieser Ansteuereinrichtung ASE werden die vom Mikroprozessorsystem µP über den lokalen Bus LB übermittelten Steuerbefehle in Informationen umsetzt, durch die die Verbindungswege im Akustikkoppler AK eingestellt werden. Der Akustikkoppler AK ist beispielsweise durch in CMOS-Technik ausgeführte analoge Koppelpunkte realisiert. Zusätzlich steuert die Ansteuereinrichtung ASE einen Ruftongenerator RT, der je nach Ansteuerung unterschiedliche Ruftöne mit entsprechenden Rufrhythmen erzeugt. Diese Ruftöne werden über den Akustikkoppler AK unter Steuerung der Ansteuerungeinrichtung ASE an den Handapparat HA und/oder den Lautsprecher LS vermittelt.

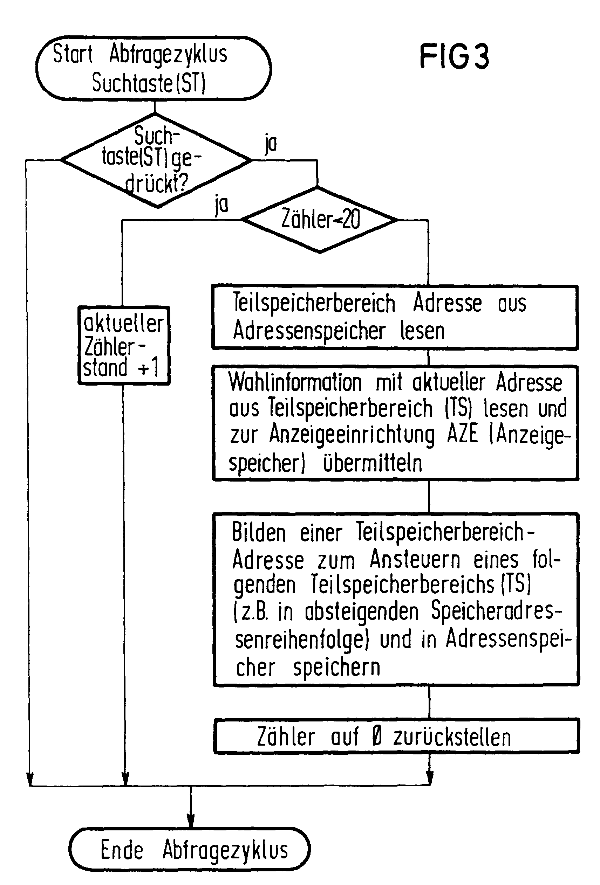

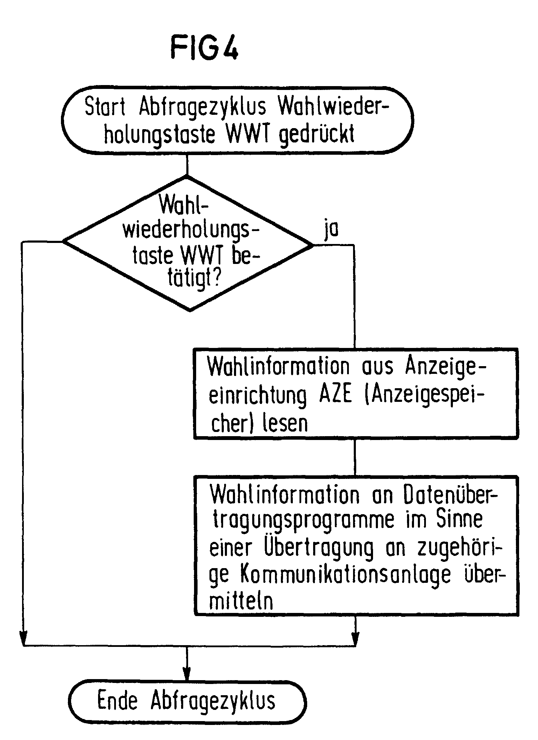

FIG 3 und FIG 4 zeigen die sich selbst erläuternden Programmablaufdiagramme für das Suchen einer Wahlinformation in der Wahlinformations-Speichereinrichtung WIS und das Einleiten eines Verbindungsaufbaus mit der gesuchten Wahlinformation durch Betätigen der Wahlwiederholungstaste WWT. Das diese Programmabläufe realisierende Programm ist im Programmspeicher PS des Kommunikationsendgerätes KE gespeichert. Beim Einspeichern von Wahlinformationen werden die von den Wahltasten abgegebenen Wahlinformationen im Bedienfeld-Mikroprozessorsystem BµP erkannt, die entsprechenden Wahlinformationen codiert und über den Mikroprozessor µP zu den jeweiligen Teilspeicherbereichen TS der Wahlinformationsspeichereinrichtung WIS übertragen. Die Wahlinformationen werden hierbei beispielsweise nacheinander, z. B. zyklisch in Speicheradressen absteigender Reihenfolge, in die Wahlinformations-Speichereinrichtung WIS eingespeichert. Analog hierzu können, wie in FIG 3 dargestellt, die Wahlinformationen aus der Wahlinformations-Speichereinrichtung WIS zyklisch, in Speicheradressen aufsteigender Reihenfolge mit Hilfe der Suchtaste ST angesteuert, gelesen und in der Anzeigeeinrichtung AZE angezeigt werden.

Wie bereits erläutert, können die Wahlinformationen auch gruppenweise an die Anzeigeeinrichtung AZE übermittelt, dort angezeigt und mit Hilfe der Suchtaste ST bzw. eines Markierungssymbols ausgewählt werden. Die Anzeigedauer der angesteuerten Wahlinformation wird durch eine Zählschleife realisiert. Wird der Abfragezyklus beispielsweise alle 25 ms für alle Tasten initialisiert, so beträgt die Anzeigedauer 20 mal 25 ms, also 500 ms. Durch Variieren des Zählerhöchstwertes kann die Anzeigedauer bestimmt werden. Dieser Zählerhöchstwert kann teilnehmerindividuell durch eine entsprechende Eingabe bestimmt oder durch eine eingespeicherte Information, z. B. in der Datenbasis, festgelegt werden.

## Patentansprüche

1. Verfahren zur Wahlwiederholung in einem an eine Kommunikationsanlage angeschlossenen und mit einer optischen und/oder akustischen Anzeigeeinrichtung sowie mit Wahl- und funktionalen Eingabemitteln ausgestatteten Kommunikationsendgerät, wobei im Kommunikationsendgerät (KE) gebildete Wahlinformationen zumindest temporär in Teilspeicherbereichen (TS) einer Wahlinformations-Speichereinrichtung (WIS) gespeichert werden,
daß die Teilspeicherbereiche (TS) mit Hilfe eines Sucheingabemittels (ST) ansteuerbar sind, wobei die in den Teilspeicherbereichen (TS) enthaltenen Wahlinformationen jeweils akustisch und/oder optisch angezeigt werden und
daß mit Hilfe eines Wahlwiederholungseingabemittels (WWT) die Wahlinformationen des ak-tuell angesteuerten Teilspeicherbereiches (TS) im Sinne einer Wahlwiederholung an die Kommunikationsanlage (KA) übermittelt werden,
**dadurch gekennzeichnet,**
daß alle im Kommunikationsendgerät (KE) gebildeten Wahlinformationen gespeichert werden,
daß zusätzlich die am Kommunikationsendgerät (KE) ankommenden Wahlinformationen in Teilspeicherbereichen (TS) in der Wahlinformations-Speichereinrichtung (WIS) gespeichert und markiert werden, sowie in gleicher Weise wie die im Kommunikationsendgerät (KE) gebildeten Wahlinformationen ansteuerbar, anzeigbar und übermittelbar sind.

2. Verfahren nach Anspruch 1,
**dadurch gekennzeichnet**,
daß die Wahlinformationen in einer hinsichtlich der Anzahl der Teilspeicherbereiche (TS) begrenzten Wahlinformations-Speichereinrichtung (WIS) zyklisch, in Teilspeicherbereich-Reihenfolge gespeichert werden.

3. Verfahren nach mindestens einem der vorhergehenden Ansprüche,
**dadurch gekennzeichnet**,
daß die Teilspeicherbereiche (TS) der Wahlinformations-Speichereinrichtung (WIS) mit Hilfe des Sucheingabemittels (ST) zyklisch, in Teilspeicherbereich-Reihenfolge ansteuerbar sind.

4. Verfahren nach mindestens einem der vorhergehenden Ansprüche,
**dadurch gekennzeichnet**,
daß mehrere Wahlinformationen mit Hilfe der Anzeigeeinrichtung (AZE) simultan angezeigt werden und daß mit Hilfe des Sucheingabemittels (ST) ein Markierungssymbol von angezeigter Wahlinformation zu Wahlinformation steuerbar ist.

## Claims

1. Method for automatic redialling in a communications terminal connected to a digital private branch exchange and equipped with a visual and/or audible indicating device and with dialling and functional input means, dialling information items formed in the communications terminal (KE) being at least temporarily stored in partial storage areas (TS) of a dialling information storage device (WIS), in that the partial storage areas (TS) can be selected with the aid of a search input means (ST), the dialling information items contained in the partial storage areas (TS) being in each case indicated audibly and/or visually, and in that the dialling information items of the currently selected partial storage area (TS) are transmitted as automatic redialling to the digital private branch exchange (KA) with the aid of a redialling input means (WWT) characterized in that all the dialling information items formed in the communications terminal (KE) are stored, in that additionally the dialling information items arriving at the communications terminal (KE) are stored in partial storage areas (TS) in the dialling information storage device (WIS) and marked, and can be selected, displayed and transmitted in the same manner as the dialling information items formed in the communications terminal (KE).

2. Method according to Claim 1, characterized in that the dialling information items are cyclically stored in partial-storage-area order in a dialling information storage device (WIS) which is limited with respect to the number of partial storage areas (TS).

3. Method according to at least one of the preceding claims, characterized in that the partial storage areas (TS) of the dialling information storage device (WIS) can be cyclically selected in partial-storage-area order with the aid of the search input means (ST).

4. Method according to at least one of the preceding claims, characterized in that a number of dialling information items are simultaneously indicated with the aid of the indicating device (AZE), and in that a marking symbol can be controlled from indicated dialling information item to dialling information item with the aid of the search input means (ST).

## Revendications

1. Procédé de renumérotation dans un appareil terminal de communication connecté à une installation de communication et équipé d'un dispositif d'indication optique et/ou acoustique ainsi que de moyens de numérotation et d'entrée fonctionnelle, dans lequel on mémorise les informations de numérotation formées dans l'appareil (KE) terminal de communication, au moins temporairement, dans des zones (TS) de mémoire partielles d'un dispositif (WIS) de mémorisation d'informations de numérotation,
on peut commander les zones (TS) de mémoire partielles à l'aide d'un moyen (ST) d'entrée de recherche, les informations de numérotation contenues dans les zones (TS) de mémoire partielles étant chacune indiquées de manière acoustique et/ou optique et
on transmet à l'aide d'un moyen (WWT) d'entrée de renumérotation, les informations de numérotation de la zone (TS) de mémoire partielle actuellement commandée à l'installation (KA) de communication en vue d'une renumérotation,
caractérisé en ce qu'
on mémorise toutes les informations formées dans l'appareil (KE) terminal de communication,
en outre on mémorise et on marque les informations de numérotation arrivant à l'appareil (KE) terminal de communication dans les zones (TS) de mémoire partielles dans le dispositif (WIS) de mémorisation d'informations de numérotation, ces informations pouvant être transmises, indiquées et commandées de la même manière que les informations de numérotation formées dans l'appareil (KE) terminal de communication.

2. Procédé suivant la revendication 1,
caractérisé en ce que
on mémorise les informations de numérotation dans un dispositif (WIS) de mémorisation d'informations de numérotation limité quant au nombre des zones (TS) de mémoire partielles, de manière cyclique et dans l'ordre des zones de mémoire partielles.

3. Procédé selon au moins l'une des revendications précédentes,
caractérisé en ce que
on peut commander les zones (TS) de mémoire partielles du dispositif (WIS) de mémorisation d'informations de numérotation dans l'ordre des zones de mémoire partielles, de manière cyclique, à l'aide du moyen (ST) d'entrée de recherche .

4. Procédé selon au moins l'une des revendications précédentes,
caractérisé en ce que
on indique plusieurs informations de numérotation simultanément à l'aide du dispositif (AZE) d'indication et on peut commander un symbole de marquage d'information de numérotation affichée en information de numérotation, à l'aide du moyen (ST) d'entrée de recherche.
